# EUROPEAN PATENT APPLICATION

(11) **EP 4 729 357 A1**
(43) Date of publication of application: **22.04.2026**
(21) Application number: 25197044.8
(22) Date of filing: 20.08.2025
(51) Int. Cl.: B60N 2/75, B60R 21/04

(54) **VEHICLE CONSOLE STRUCTURE**

(30) Priority: 15.10.2024 JP 2024179743
(71) Applicant: Suzuki Motor Corporation, Shizuoka 432-8611 (JP)
(72) Inventor: KIMPARA, Masanori, Hamamatsu-shi, 432-8611 (JP); YAMAGUCHI, Eiji, Hamamatsu-shi, 432-8611 (JP); IZUMI, Shogo, Hamamatsu-shi, 432-8611 (JP)
(74) Representative: Haseltine Lake Kempner LLP

(57) **Abstract**

[Problem to be Solved] An impact energy due to an impact load and the like applied to a console is effectively absorbed.

[Solution] A vehicle console structure includes a frame structure body 10 having side wall portions 11, a bracket 40 configured to attach the frame structure body 10 to a floor portion and having fastening portions 20c to which the frame structure body 10 is fastened, a storage box 30 disposed between the side wall portions 11 on both sides and extending in the vehicle up-down direction, and an armrest 35 disposed on an upper portion of the storage box 30 and configured to be able to open and close the upper-side open portion 31. Fragile portions 23, 34 that are fragile in the up-down direction compared to the side wall portions 11 located on the outer sides of the storage box 30 are provided in the side wall portions 11 located on at least one of the front side or the rear side of the fastening portions 20c and on the lower side relative to the storage box 30.

## Description

### [Technical Field]

The present invention relates to vehicle console structures.

### [Background Art]

As disclosed in Patent Literature 1, a vehicle in which a center console is provided in a vehicle compartment is known. The center console is an interior member and is attached to a floor portion located between a driver's seat and a passenger seat in a vehicle compartment, for example. For example, the center console is attached to a floor panel of the floor portion via a bracket provided on a lower portion of the center console.

An operation unit for operating devices mounted on the vehicle is provided in the center console, for example. The center console is used as an armrest and a goodsaccommodating portion, for example.

A rigidity that may withstand normal use needs to be secured for the center console. For example, when the center console is used as an armrest, a degree of rigidity with which side portions, for example, of the center console do not deform when an arm of an occupant is placed thereon is necessary. The center console needs a rigidity that may also withstand a load that is applied when the center console is pressed by a foot of an occupant sitting in a rear seat, for example.

When an impact load is applied to a rear portion of the center console, for example, a rear portion of the armrest from the vehicle upper side, it is required to effectively absorb the impact. For example, when an impact load due to a frontal collision is applied to the vehicle, an occupant sitting in the rear seat moves to the vehicle front side, and a part of the body of the occupant collides with an upper portion of the center console, the center console is desired to absorb the impact.

In the structure of the example described above, a storage portion is provided in the center console, and fragile portions are provided in a rear portion of a bottom portion of the storage portion. For example, when an impact load is applied to the armrest from the side above the center console in the vehicle up-down direction thereof, the impact load is transmitted to the storage portion from the armrest and is then transmitted to the fragile portions provided in the bottom portion of the storage portion. In this example, the impact is absorbed as a result of the fragile portions fracturing and a rear wall of the storage portion and the bottom portion of the storage portion being split apart.

### [Citation List]

### [Patent Literature]

[Patent Literature 1] JP 2019-209836 A

### [Summary of Invention]

### [Problem to be Solved by the Invention]

However, in the structure of the example described above, there are cases in which the load is not easily transmitted to the fragile portion. As one example, a case in which an item stored in the storage portion is an item that is long in the vehicle up-down direction, extends from the bottom portion of the storage portion to a lower surface of the armrest, and has a predetermined rigidity and is a cylindrical item made of metal, for example, can be given.

When an impact load is applied to the armrest from the vehicle upper side in a state in which such an item is accommodated in the storage portion of the example described above, there is a possibility that the impact may be transmitted to the bottom portion of the storage portion from the armrest via the item. **In** this case, the load is transmitted to the floor portion from the bottom portion via the bracket without being transmitted to the fragile portion. When the fragile portions do not fracture, it is still not sufficient to absorb the impact. Therefore, there has been room for improvement in the structure of the example described above when an impact energy due to the impact load and the like applied to the center console is to be effectively absorbed.

The present invention has been made in order to solve the problem described above, and an object thereof is to provide a vehicle console structure capable of effectively absorbing an impact energy due to an impact load and the like applied to a console provided in a vehicle compartment.

### [Means for Solving the Problem]

A vehicle console structure according to the present invention for achieving the object described above includes a frame structure body extending in the vehicle front-rear direction and having side wall portions disposed to be spaced apart from each other in the vehicle width direction in a vehicle-width-direction intermediate portion of a floor portion in a vehicle compartment, a bracket configured to attach a lower portion of the frame structure body to the floor portion, a storage portion disposed between the side wall portions on both sides, extending in a vehicle up-down direction, and having an open portion in an upper portion, and an armrest portion disposed on an upper portion of the storage portion and configured to be able to open and close the open portion. In the vehicle console structure, a fragile portion, which is fragile in the vehicle up-down direction, is provided in the side wall portion located on at least one of the vehicle front side or the vehicle rear side of the bracket and on the lower side relative to the storage portion.

### [Advantageous Effect of Invention]

According to the present invention, it becomes possible to effectively absorb the impact energy due to the impact load and the like applied to the console provided in the vehicle compartment.

### [Brief Description of Drawings]

[Figure 1] Figure 1 is a perspective view of the inside of a vehicle compartment having a vehicle console structure according to the present invention from the vehicle rear side.
[Figure 2] Figure 2 is an exploded perspective view of a rear console in Figure 1.
[Figure 3] Figure 3 is a side view showing a state in which a cover member on the right side of the rear console in Figure 1 is removed.
[Figure 4] Figure 4 is a perspective view showing a seating surface portion and fragile portions in Figure 3 in an enlarged manner.
[Figure 5] Figure 5 is a perspective view of the fragile portions and the like in Figure 4 seen from the vehicle front side.
[Figure 6] Figure 6 is a perspective view of a section A-A in Figure 3 seen from the vehicle rear side.
[Figure 7] Figure 7 is a perspective view showing the rear console in Figure 2 from the vehicle lower side by omitting a bottom surface portion of the armrest.
[Figure 8] Figure 8 is an exploded perspective view of the armrest in Figure 2 and shows a state seen from the lower side of a top surface portion.
[Figure 9] Figure 9 is a perspective view showing a state in which a front portion of a storage box in Figure 2 is attached to a frame structure body.

### [Mode for Carrying Out the Invention]

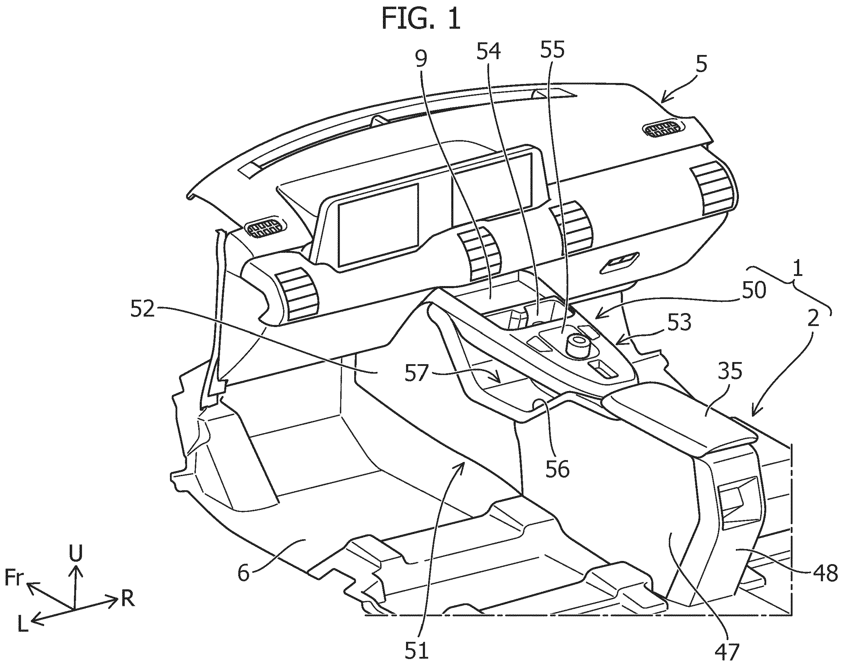

One embodiment of a vehicle console structure according to the present invention is described below with reference to the drawings (Figure 1 to Figure 9). In the drawings, the direction of an arrow Fr indicates the front side in the vehicle front-rear direction. "A front portion (front end) and a rear portion (rear end)" in the description of the embodiment correspond to a front portion and a rear portion in the vehicle front-rear direction. An arrow R and an arrow L indicate the right side and the left side when an occupant views the vehicle front side. An arrow U shows the vehicle upper side.

The vehicle console structure of the present embodiment is a structure of a console unit 1 disposed in a vehicle-width-direction intermediate portion in a vehicle compartment. As shown in Figure 1, the console unit 1 of the present embodiment is an intermediate portion in the vehicle compartment in the vehicle width direction thereof and is a so-called center console box disposed between a driver's seat (not shown) and a passenger seat (not shown) disposed in the vehicle compartment. The console unit 1 of the present embodiment has a predetermined width, extends to the vehicle upper side from a floor portion, and extends in the vehicle front-rear direction.

The vehicle console structure of the present embodiment, in other words, the console unit 1 has a frame structure body 10 extending in the vehicle front-rear direction. The frame structure body 10 is a member constituting a frame on the inner side of the console unit 1 and is formed of a resin material, for example. The frame structure body 10 of the present embodiment has side wall portions 11 disposed to be spaced apart from each other in the vehicle width direction in the vehicle-width-direction intermediate portion of the floor portion in the vehicle compartment.

The console unit 1 has a bracket 40 that attaches a lower portion of the frame structure body 10 to the floor portion, a storage box 30 disposed between the side wall portions 11 on both sides, extending in the vehicle up-down direction, and having an upper-side open portion 31 (open portion) in an upper portion thereof, and an armrest 35 disposed on the upper portion of the storage box 30 and configured to be able to open and close the upper-side open portion 31. The armrest 35 functions as a lid of the storage box 30.

Fragile portions are provided in the side wall portions 11 located on at least one of the vehicle front side and the vehicle rear side of the bracket 40 and on the lower side relative to the storage box 30. The fragile portions are fragile (low in rigidity) in the vehicle up-down direction compared to the side wall portions 11 located on the outer sides of the storage box 30.

The console unit 1 of the present embodiment has a front console 50 and a rear console 2, and the front console 50 and the rear console 2 are disposed to line up in the vehicle front-rear direction. In the present embodiment, a part including the armrest 35 shown in Figure 1 is the rear console 2, and a part located on the vehicle front side relative to the rear console 2 is the front console 50. The front console 50 and the rear console 2 may be integrally configured. The frame structure body 10 constitutes a frame on the inner side of the front console 50 and a frame on the inner side of the rear console 2. In other words, a part on the front side relative to an intermediate portion of the frame structure body 10 in the vehicle front-rear direction thereof constitutes the frame on the inner side of the front console 50, and a part on the rear side relative to the intermediate portion constitutes a frame on the inner side of the rear console 2.

First, the front console 50 is described. The front console 50 has a lower-side unit 51 and an upper-side unit 53 disposed to be spaced apart from the lower-side unit 51 to the vehicle upper side of the lower-side unit 51. In this example, open portions 56 are provided in the vehicle-width-direction side portions between the upper-side unit 53 and the lower-side unit 51.

As shown in Figure 1, the lower-side unit 51 has side walls 52 disposed on both sides in the vehicle width direction thereof. The side walls 52 extend to the vehicle upper side from both end portions of the floor panel 6 in the vehicle width direction thereof and extend in the vehicle front-rear direction. The side walls 52 include covers that cover the side portions of the frame structure body 10 from the vehicle outer sides. Front portions of the side walls 52 are disposed on the lower side of an instrument panel 5 disposed in a front portion of the vehicle compartment. A storage portion 57 in which a small object and the like can be temporarily placed is provided in an upper portion of the lower-side unit 51. An occupant can access the storage portion 57 from the open portions 56 between the upper-side unit 53 and the lower-side unit 51.

A cup holder portion 54 in which a cup and the like are placed is provided in the upper portion of the upper-side unit 53, and a shift selector 55 (shift lever) is disposed in an upper portion located on the vehicle rear side of the cup holder portion 54. The shift selector 55 protrudes to the vehicle upper side from a rear portion of an upper portion of the upper-side unit 53 and is configured to be operatable by the occupant (driver). On the vehicle rear side of the upper-side unit 53, the armrest 35 of the rear console 2 is disposed to be lined up. The upper-side unit 53 is a unit connected to the frame structure body 10 and is a unit that is a body separate from the frame structure body 10.

As shown in Figure 1, the rear console 2 is a part extending to the vehicle rear side from a rear portion of the front console 50. The front portion of the rear console 2 is connected to the rear portion of the front console 50. The rear console 2 includes a part of the frame structure body 10, and furthermore has the bracket 40, the storage box 30, the armrest 35, the side surface covers 47, and a rear surface cover 48 as described above. The fragile portions described above are provided in the side wall portions 11 of the frame structure body 10 constituting the rear console 2.

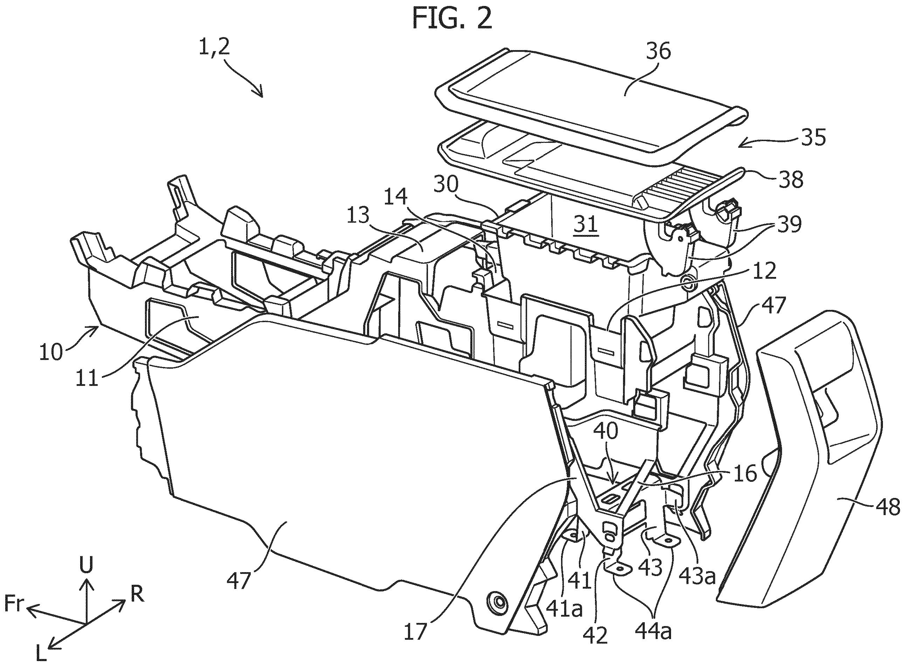

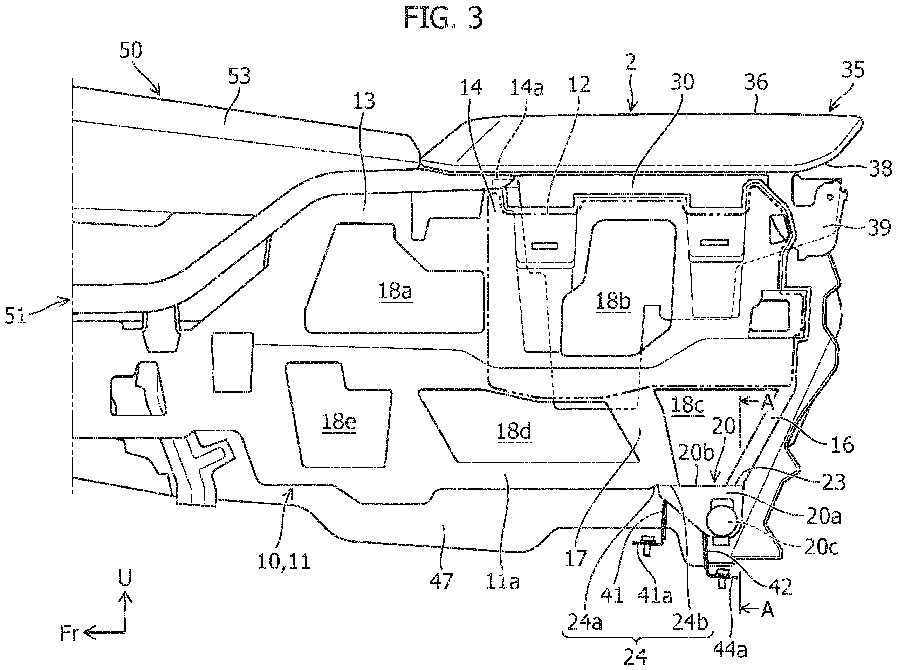

Here, the configuration of the frame structure body 10 is described. The frame structure body 10 of the present embodiment is formed of a resin material and has the side wall portions 11 and a plurality of beam portions as shown in Figure 2 and Figure 3. The side wall portions 11 are disposed to be spaced apart from each other in the vehicle width direction. The side wall portions 11 on both of right and left sides extend in the vehicle front-rear direction and the vehicle up-down direction. The plurality of beam portions include two beam portions (a first beam portion 13 and a second beam portion 14) provided in intermediate portions of upper portions of the side wall portions 11 in the vehicle front-rear direction thereof. The second beam portion 14 is disposed to be spaced apart from the first beam portion 13 to the vehicle rear side.

As shown in Figure 3, a rear portion of the upper-side unit 53 and a rear portion of the lower-side unit 51 are attached to the first beam portion 13. The rear portion of the upper-side unit 53 is preferably attached to the first beam portion 13 in a state of overlapping on an upper portion of the rear portion of the lower-side unit 51. Front-side attachment portions 14a to which a front portion of the storage box 30 is attached are provided in the second beam portion 14. The relationship between the second beam portion 14 and the storage box 30 is described later.

Front portions of the side wall portions 11 constitute a part of side walls of the lower-side unit 51 of the front console 50. In this example, the front portions of the side wall portions 11 are the side wall portions 11 located on the vehicle front side relative to the second beam portion 14. Covers that constitute the side walls of the front console 50 and are made of resin are attached to the front portions of the side wall portions 11. Front ends of the side wall portions 11 are preferably connected to the instrument panel.

Rear portions of the side wall portions 11 constitute a part of side walls of the rear console 2. In this example, the rear portions of the side wall portions 11 are the side wall portions 11 located on the vehicle rear side relative to the second beam portion 14. The storage box 30 is disposed between the side wall portions 11 on both sides, and the armrest 35 is disposed on the upper portion of the storage box 30. Lower portions of the rear portions of the side wall portions 11 are attached to the floor portion via the bracket 40. Details of the rear portions of the side wall portions 11 are described later.

Here, the bracket 40 is described. The bracket 40 of the present embodiment is a member for attaching the rear portions of the side wall portions 11 of the frame structure body 10 to the floor portion and is a member having a high rigidity and formed of a metal material.

As shown in Figure 2, the bracket 40 is a member having a gate-like shape in side view. A front wall 41 extending to the vehicle upper side from the floor panel 6 is provided on a front portion of the bracket 40, and a front flange 41a protruding to the vehicle front side is provided on a lower end of the front wall 41. The front flange 41a is fastened to the floor panel 6 by a bolt and the like. Rear walls 42, 43 extending to the vehicle upper side from the floor panel 6 are provided on a rear portion of the bracket 40. The rear walls 42, 43 have the rear left wall 42 and the rear right wall 43 disposed to be spaced apart from each other in the vehicle width direction. Rear flanges 44a are provided on lower ends of the rear left wall 42 and the rear right wall 43. As with the front flange 41a, the rear flanges 44a are fastened to the floor panel 6 by bolts and the like.

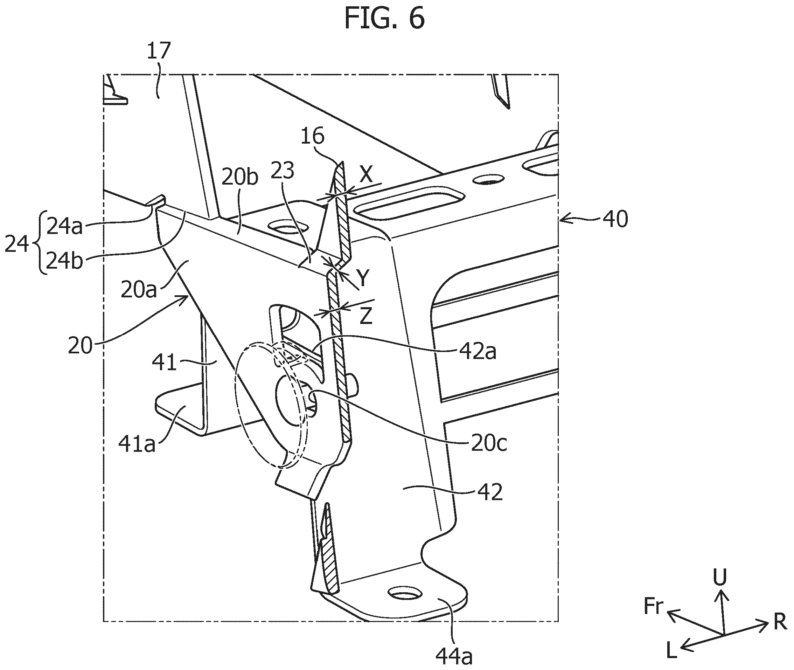

As shown in Figure 2, a right flange 43a protruding to the vehicle rear side is provided on a vehicle-up-down-direction intermediate portion of a vehicle-width-direction outer side end of the rear right wall 43. A through-hole is formed in the right flange 43a. The right flange 43a is joined to a seating surface portion 20 of the side wall portion 11 on the right side of the frame structure body 10, described later. A left flange 42a protruding to the vehicle rear side is provided on a vehicle-up-down-direction intermediate portion of a vehicle-width-direction outer side end of the rear left wall 42 (Figure 6). As with the right flange 43a, a through-hole is formed in the left flange 42a. As with the right flange 43a, the left flange 42a is joined to a seating surface portion 20 of the side wall portion 11 on the left side.

An upper surface portion 40a that connects the front wall 41 and the rear walls 42, 43 is provided in an upper portion of the bracket 40. The upper surface portion 40a is a plate-like part extending in the vehicle width direction.

Next, the storage box 30 attached to the frame structure body 10 is described. As shown in Figure 2, the storage box 30 is a member made of resin, disposed between the side wall portions 11 on both sides, and extending in the vehicle up-down direction. The upper-side open portion 31 is provided in the upper portion of the storage box 30. As shown in Figure 3, in the storage box 30 of the present embodiment, a bottom portion of the front portion of the storage box 30 is disposed on the vehicle lower side relative to a bottom portion of a rear portion of the storage box 30. In other words, the front portion of the storage box 30 is configured to be able to store therein an item that is longer (vertically longer) than the rear portion.

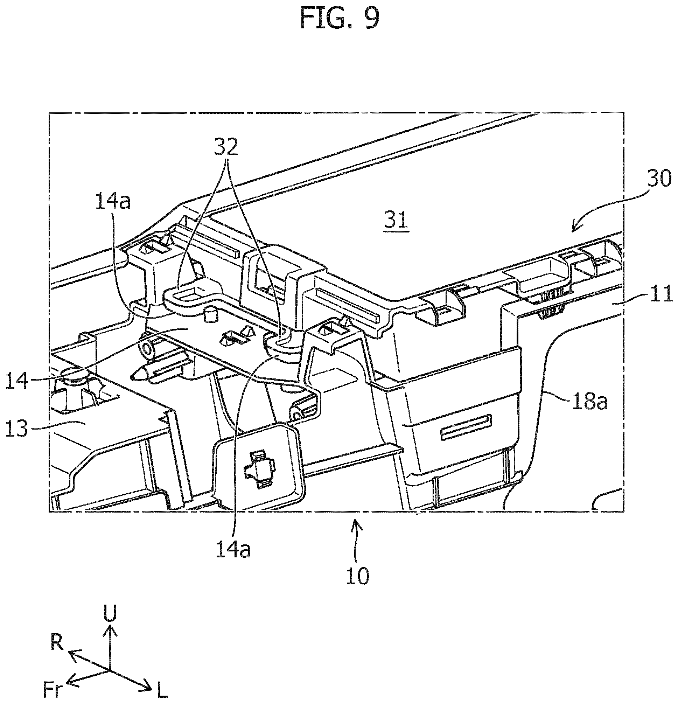

As shown in Figure 9, a front edge portion of the upper-side open portion 31 of the storage box 30 is attached to the front-side attachment portions 14a provided in the second beam portion 14. Flanges 32 protruding to the vehicle front side are provided in a front portion of the open portion of the storage box 30, and through-holes passing through the flanges 32 in the vehicle up-down direction are provided in the flanges 32. The flanges 32 are attached to the front-side attachment portions 14a provided in the second beam portion 14 by fastening portions 20c such as clips.

Next, the locations of the fragile portions are described. The fragile portions are provided in the lower portions of the rear portions of the side wall portions 11. The fragile portions are preferably provided in the side wall portions 11 located on at least one of the vehicle front side and the vehicle rear side of the bracket 40 and on the lower side relative to the storage box 30. As described above, the fragile portions are fragile (low in rigidity) in the vehicle up-down direction compared to the side wall portions 11 located on the outer sides of the storage box 30. In the present embodiment, the fragile portions include a front-side fragile portion 24 disposed on the front side of a fastening portion 20c provided in the bracket 40, and a rear-side fragile portion 23 disposed on the rear side of the fastening portion 20c.

Here, the rear portions of the side wall portions 11 are described in detail.

As shown in Figure 2 and Figure 3, each side wall portion 11 includes a base portion 12, the seating surface portion 20, the fastening portion 20c, a rear leg portion 16, and a front leg portion 17. The base portion 12 is a part disposed in an upper portion of the rear portion of the side wall portion 11 and has a higher rigidity than the fragile portion. In this example, the base portion 12 is a part indicated by a two-dot chain line in Figure 3 and is the side wall portion 11 located on the upper side of the rear leg portion 16 and the front leg portion 17. Multiple open portions are provided in the side wall portion 11, and ribs are formed on the side wall portion 11 located between adjacent open portions. By those ribs, the rigidity of the side wall portion 11 including the base portion 12 is secured.

The seating surface portion 20 is disposed on the lower side of the base portion 12 to be spaced apart therefrom. The seating surface portion 20 has a main portion 20a facing the vehicle width direction, and an upper-side flange portion 20b provided on an upper portion of the main portion 20a. The main portion 20a of the seating surface portion 20 is a part in abutment against the bracket 40. The main portion 20a of the seating surface portion 20 of the side wall portion 11 on the right side is in abutment against the right flange 43a of the bracket 40, and the main portion 20a of the seating surface portion 20 of the side wall portion 11 on the left side is in abutment against the left flange 42a of the bracket 40 (Figure 6). The upper-side flange portion 20b of the seating surface portion 20 is a part protruding to the vehicle-width-direction inner side from the upper portion of the main portion 20a, and an upper surface of the upper-side flange portion 20b is horizontal and extends in the vehicle front-rear direction. The rear-side fragile portion 23 is provided in an upper portion of the main portion 20a located on the vehicle rear side of the upper-side flange portion 20b, and a part of the front-side fragile portion 24 is provided in a front portion of the upper-side flange portion 20b. The fragile portions are described later.

The fastening portion 20c is a part provided on a vehicle-front-rear-direction intermediate portion of the main portion 20a of the seating surface portion 20 and fastened to the bracket 40 via the fastening portion 20c. The fastening portion 20c includes a through-hole provided in the main portion 20a of the seating surface portion 20, and the through-hole is disposed in a part that is an intermediate portion in the main portion 20a of the seating surface portion 20 in the vehicle front-rear direction thereof and an intermediate portion in the main portion 20a of the seating surface portion 20 in the vehicle up-down direction thereof. In this example, the through-hole is disposed slightly above a lower end of the main portion 20a (a lower portion of the main portion 20a) and slightly ahead of a rear end of the main portion 20a (a rear portion of the seating surface portion 20).

As shown in Figure 2, the main portion 20a of the seating surface portion 20 is in abutment against, and is fastened to, the right flange 43a in a state in which the fastening portion 20c such as a bolt passes through the through-hole in the main portion 20a of the seating surface portion 20 on the right side and the through-hole in the right flange 43a. Similarly, the main portion 20a of the seating surface portion 20 is in abutment against, and is fastened to, the left flange 42a in a state in which the fastening portion 20c such as a bolt passes through the through-hole in the main portion 20a of the seating surface portion 20 on the left side and the through-hole in the left flange 42a.

Next, the rear leg portion 16 is described. As shown in Figure 2 and Figure 3, the rear leg portion 16 is a part extending toward a rear portion of the seating surface portion 20 from a rear portion of a lower portion of the base portion 12. The rear leg portion 16 extends to be inclined toward the vehicle front side as the rear leg portion 16 approaches the vehicle lower side. A lower portion of the rear leg portion 16 is connected to a rear portion of an upper portion of the seating surface portion 20. The rear leg portion 16 is connected to an upper portion of the seating surface portion 20 located on the vehicle rear side of the upper-side flange portion 20b of the seating surface portion 20. The length of the rear leg portion 16 in this example in the vehicle front-rear direction thereof is formed so as to be substantially constant along the direction of inclination.

Next, the front leg portion 17 is described. The front leg portion 17 is a part extending toward a front portion of the seating surface portion 20 from a vehicle-front-rear-direction intermediate portion of the lower portion of the base portion 12. The front leg portion 17 extends to be inclined toward the vehicle rear side as the front leg portion 17 approaches the vehicle lower side. A lower portion of the front leg portion 17 is connected to a front portion of the upper-side flange portion 20b of the seating surface portion 20. The length of the front leg portion 17 in the vehicle front-rear direction thereof is formed so as to become shorter as the front leg portion 17 approaches the vehicle lower side.

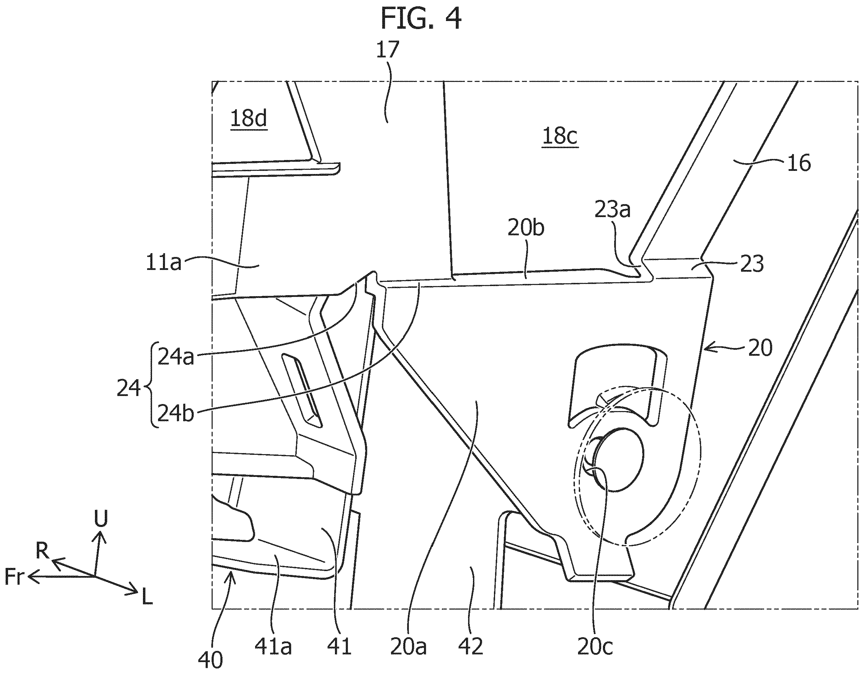

Next, the rear-side fragile portion 23 is described. As shown in Figure 3, the rear-side fragile portion 23 is disposed below a lower end of the storage box 30 in the vehicle up-down direction and is disposed on the rear side of the fastening portion 20c of the bracket 40 in the vehicle front-rear direction. In Figure 3, the external form of the storage box 30 is schematically shown. As shown in Figure 4 to Figure 6, the rear-side fragile portion 23 extends in the vehicle front-rear direction and is inclined upward as the rear-side fragile portion 23 approaches the vehicle-width-direction inner side from a vehicle-width-direction inner side portion of the upper portion of the seating surface portion 20, and a vehicle-width-direction inner side portion of the rear-side fragile portion 23 in the vehicle width direction thereof is connected to the rear leg portion 16. A lower end of the rear leg portion 16 is disposed on the vehicle-width-direction inner side relative to the main portion 20a of the seating surface portion 20.

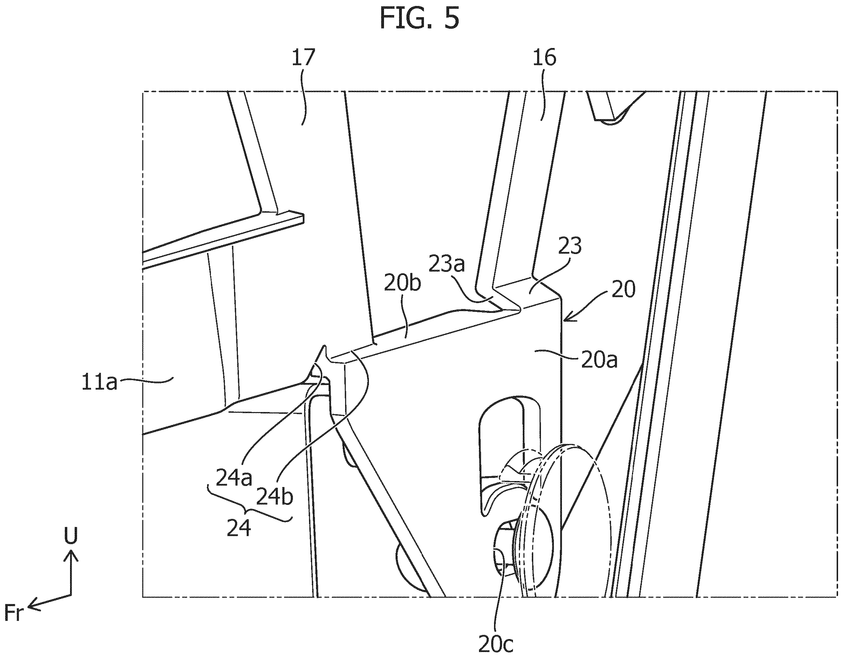

As shown in Figure 4 and Figure 5, the rear-side fragile portion 23 has a plate-like shape extending in the vehicle front-rear direction so as to correspond to the length of the lower portion of the rear leg portion 16 in the vehicle front-rear direction thereof. The rear-side fragile portion 23 protrudes to the vehicle-width-direction inner side from an upper portion of the main portion 20a of the rear portion of the seating surface portion 20. The protruding direction is inclined upward as described above. A vehicle-width-direction inner side end of the rear-side fragile portion 23 is connected to the lower end of the rear leg portion 16. Here, an angle formed on the vehicle-width-direction outer side by the rear-side fragile portion 23 and the rear leg portion 16 is an obtuse angle.

The upper-side flange portion 20b of the seating surface portion 20 is disposed on the vehicle front side relative to the rear-side fragile portion 23. As shown in Figure 5, a front end surface 23a of the rear-side fragile portion 23 faces the vehicle front side. A vehicle-width-direction inner side portion of the front end surface 23a is disposed above an upper surface of the upper-side flange portion 20b of the seating surface portion 20 and extends along the direction of inclination described above. A vehicle-width-direction outer side portion of the front end surface 23a extends upward from a rear end of the upper-side flange portion 20b of the seating surface portion 20. The rear-side fragile portion 23 is inclined upward with respect to the upper-side flange portion 20b.

A part in which the rear-side fragile portion 23 and the seating surface portion 20 are connected to each other is the vehicle-width-direction outer side portion of the front end surface 23a, the length of the vehicle-width-direction outer side portion of the front end surface 23a in the vehicle width direction thereof is set to be half or less of the length of the upper surface of the upper-side flange portion 20b in the vehicle width direction thereof. By the configuration described above, the rear-side fragile portion 23 is formed to be fragile as compared to the base portion 12, for example.

**In** the present embodiment, as shown in Figure 6, a plate thickness Y of the rear-side fragile portion 23 is formed to be thinner than a plate thickness Z of the main portion 20a of the seating surface portion 20 and is formed to be thinner than a plate thickness X of the rear leg portion 16. The rear-side fragile portion 23 is formed to be more fragile than the main portion 20a of the seating surface portion 20 and the rear leg portion 16. For example, when an impact energy transmitted from the rear leg portion 16 is transmitted to the seating surface portion 20 via the rear-side fragile portion 23, the rear-side fragile portion 23 fractures. As a result, the impact energy transmitted to the seating surface portion 20 can be reduced.

Next, the front-side fragile portion 24 is described. As shown in Figure 3, the front-side fragile portion 24 is disposed on the lower side relative to the lower end of the storage box 30 and is disposed on the front side of the fastening portion 20c of the bracket 40 in the vehicle front-rear direction. The front-side fragile portion 24 of the present embodiment has a cutout portion 24a and a connecting portion 24b.

As shown in Figure 4 and Figure 5, the cutout portion 24a is provided on the vehicle front side of the upper portion of the seating surface portion 20 and is cut out toward the front leg portion 17. A rear portion of the cutout portion 24a extends upward from a front end surface of the seating surface portion 20 in a continuous manner. An upper end of the cutout portion 24a is disposed above an upper end surface of the seating surface portion 20. A front portion of the cutout portion 24a extends to be inclined to the lower side as the front portion of the cutout portion 24a approaches the vehicle front side from the upper end of the cutout portion 24a.

As shown in Figure 4 to Figure 6, the connecting portion 24b is disposed on the vehicle rear side of the cutout portion 24a. The connecting portion 24b is a part in which a lower end of the front leg portion 17 and a front portion of the upper surface of the upper-side flange portion 20b of the seating surface portion 20 are connected to each other. The lower end of the front leg portion 17 is disposed on the vehicle-width-direction inner side relative to a vehicle-width-direction outer side end of the upper surface of the upper-side flange portion 20b.

In the connecting portion 24b of the front-side fragile portion 24, the main portion 20a of the seating surface portion 20 and the lower end of the front leg portion 17 are disposed to be shifted in the vehicle width direction. In other words, the rigidity of the front-side fragile portion 24 in the vehicle up-down direction thereof is set to be lower than the main portion 20a and the front leg portion 17 by forming a step by the main portion 20a of the seating surface portion 20 and the front leg portion 17.

Next, the open portions provided in each side wall portion 11 are described. As shown in Figure 3, in the side wall portion 11, an upper-front-side open portion 18a, an upper-rear-side open portion 18b, a lower-rear-side open portion 18c, a lower intermediate open portion 18d (side wall open portion), and a lower-front-side open portion 18e are formed. The upper-rear-side open portion 18b is an open portion formed in the base portion 12 out of the side wall portion 11. The upper-front-side open portion 18a is disposed on the front side of the base portion 12, and the lower-rear-side open portion 18c is disposed between the rear leg portion 16 and the front leg portion 17 on the lower side of the base portion 12. The lower intermediate open portion 18d is disposed on the front side of the front leg portion 17. A leg portion is formed on a front portion of the lower intermediate open portion 18d, and the lower-front-side open portion 18e is disposed on the front side of the leg portion. On the side wall portion 11 located around these open portions, ribs and the like are formed, and a predetermined rigidity is secured. Therefore, for example, the side wall portions 11 can sufficiently withstand a load applied to the side wall portions 11 when the occupant places an elbow on the armrest 35. By increasing the rigidity of the side wall portions 11 located around each open portion, the load transmitted from the upper portions of the side wall portions 11 can be effectively dispersed and can be transmitted to the floor portion.

Here, the transmission of the load applied to the armrest 35 in a so-called normal state, such as a state in which the occupant places an elbow on the armrest 35, is described. The load applied to the armrest 35 at the time of so-called normal use of the armrest 35 in which the occupant places an elbow on the armrest 35 is transmitted to the beam portions and the side wall portions 11 via an opening edge of the upper-side open portion 31 of the storage box 30, for example. The load transmitted to the upper portions of the side wall portions 11 is transmitted to the leg portions, the front leg portions 17, the rear leg portions 16, and the like via the base portions 12 (the front side portions and the rear side portions of the upper-rear-side open portions 18b) and the like. Then, the load is transmitted to the seating surface portions 20 via the fragile portions and the like and is transmitted to the floor portion (floor panel 6) via the bracket 40.

In addition, for example, a case in which the impact load is applied to the armrest 35 from the upper side is described. For example, when a part of the body (for example, the head) of an occupant sitting in the center of a rear seat in the vehicle width direction thereof collides with the console unit 1 at the time of a sudden stop of the vehicle, at the time of a frontal collision, or the like, the impact load due to the collision is applied to the console unit 1, and a reaction force of the impact load is applied to the part of the body. In the present embodiment, when an impact load is applied, fracture occurs after the impact load is transmitted to the rear-side fragile portions 23 and the front-side fragile portions 24. Therefore, the impact energy due to the impact load can be absorbed.

In the present embodiment, the rear-side fragile portions 23 and the front-side fragile portions 24 are provided in the side wall portions 11 located below the storage box 30. According to such a configuration, even when a long item that extends to a lower end from an upper end inside the storage box 30 is stored inside the storage box 30, for example, it becomes possible to transmit an impact load applied to the armrest 35 to the rear-side fragile portions 23 and the front-side fragile portions 24 provided on the vehicle lower side relative to the bottom portion of the storage box 30. In other words, the rear console 2 of the present embodiment can effectively transmit the impact load input to the armrest 35 to the rear-side fragile portions 23 and the front-side fragile portions 24 without hindering the transmission of the load to the rear-side fragile portions 23 and the front-side fragile portions 24 by the shape of the item accommodated in the storage box 30. When the impact load is transmitted to the rear-side fragile portions 23 and the front-side fragile portions 24, the rear-side fragile portions 23 and the front-side fragile portions 24 fracture. Therefore, the impact energy due to the impact load is absorbed by the rear-side fragile portions 23 and the front-side fragile portions 24.

In the present embodiment, the rear-side fragile portions 23 are provided near the rear end of the console unit 1. For example, at the time of a sudden stop of the vehicle, at the time of a frontal collision, or the like, a part of the body of the occupant may move so as to rotate about a predetermined location to the vehicle rear side relative to the console unit 1 and may collide with the armrest 35. For such a movement, deformation in which a rear portion of the armrest 35 moves downward first is desired. In the present embodiment, the rear-side fragile portions 23 are provided in the locations described above, and hence the rear portion of the armrest 35 can be effectively deformed. The rear leg portion 16 is disposed on the vehicle-width-direction inner side relative to the seating surface portion 20. Therefore, cases in which the rear leg portions 16 are deformed to the outer sides toward the occupant after the rear-side fragile portions 23 fracture can be reduced.

In the present embodiment, the front-side fragile portion 24 and the rear-side fragile portion 23 are provided in the rear portion and the front portion in the upper portion of each seating surface portion 20. For example, immediately after a rear portion of the rear console 2 is deformed so as to be crushed to the lower side as a result of the rear-side fragile portions 23 fracturing, a load (a load in the tensile direction) applied upward is applied to the front leg portions 17. As a result, it becomes possible to trigger fracturing from the upper end of the cutout portion 24a formed in a substantially triangular shape in each front-side fragile portion 24. As a result, the impact energy can be effectively absorbed. When the rear leg portion 16 and the front leg portion 17 are subjected to a collision, the rear leg portion 16 is bent to the inner side and the front leg portion 17 is deformed so as to open to the outer side. As a result, the rear console 2 can be effectively deformed.

As shown in Figure 4, the length of the front-side fragile portion 24 in the vehicle front-rear direction thereof is set to be longer than the length of the rear-side fragile portion 23 in the vehicle front-rear direction thereof. In this example, the length of the connecting portion 24b of the front-side fragile portion 24 in the vehicle front-rear direction thereof is set to be longer than the length of the rear-side fragile portion 23 in the vehicle front-rear direction thereof. As a result, the rigidity of the front-side fragile portion 24 becomes slightly higher than that of the rear-side fragile portion 23, and it becomes possible to cause the fracture of the rear-side fragile portion 23 to occur before the fracture of the front-side fragile portion 24. Therefore, the rear portion of the rear console 2 can be effectively deformed downward.

In the present embodiment, the lower intermediate open portion 18d (side wall open portion) is provided in each side wall portion 11 located on the vehicle front side of the front leg portion 17. Front-side attachment portions 14a attached to the side wall portions 11 are provided on the front portion of the storage box 30. In the present embodiment, as shown in Figure 9, the front-side attachment portions 14a are provided on the second beam portion 14 provided on the front side of a front edge portion of the upper-side open portion 31 of the storage box 30. As shown in Figure 3, each front-side attachment portion 14a is disposed on the vehicle upper side of the lower intermediate open portion 18d and in an intermediate portion in the vehicle front-rear direction thereof. A part of the impact load applied to the armrest 35 is transmitted to the side wall portions 11 via the front-side attachment portions 14a. Here, the impact load can be easily transmitted to each front leg portion 17 because the lower intermediate open portion 18d and the front-side attachment portion 14a are in a location relationship as described above. As a result, the impact load can be effectively transmitted to each front-side fragile portion 24, and the impact energy can be effectively absorbed.

The side wall portions 11 located below the lower intermediate open portions 18d are disposed above the seating surface portions 20. Therefore, lower portions 11a of the side wall portions 11 located on the front side relative to the seating surface portion 20 are disposed spaced apart from the floor portion to the upper side. Therefore, when the impact load is transmitted to the side wall portions 11, cases in which the lower portions of the side wall portions 11 abut against the floor portion before the rear-side fragile portions 23 and the front-side fragile portions 24 fracture can be reduced.

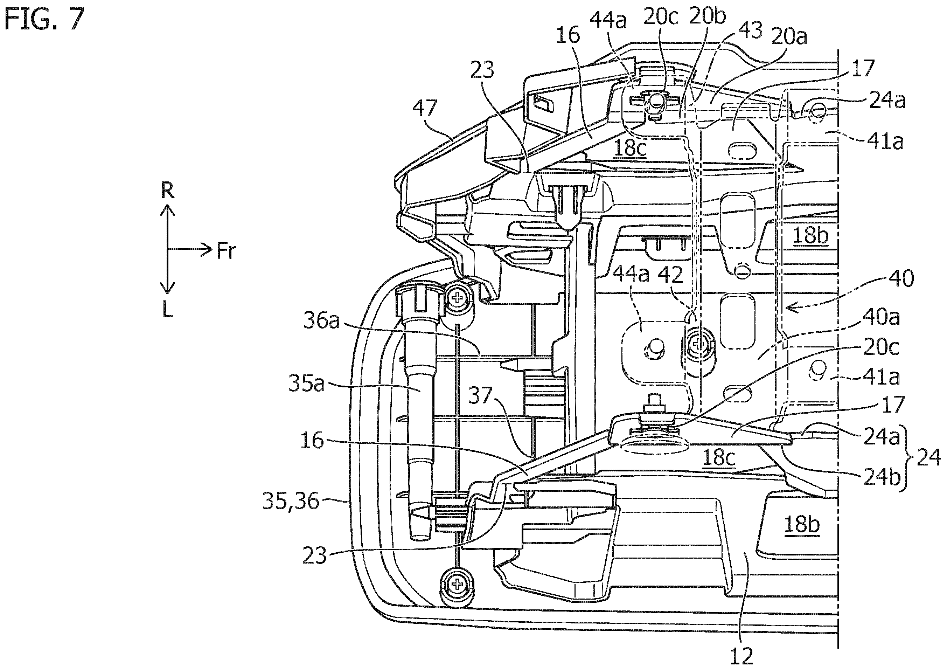

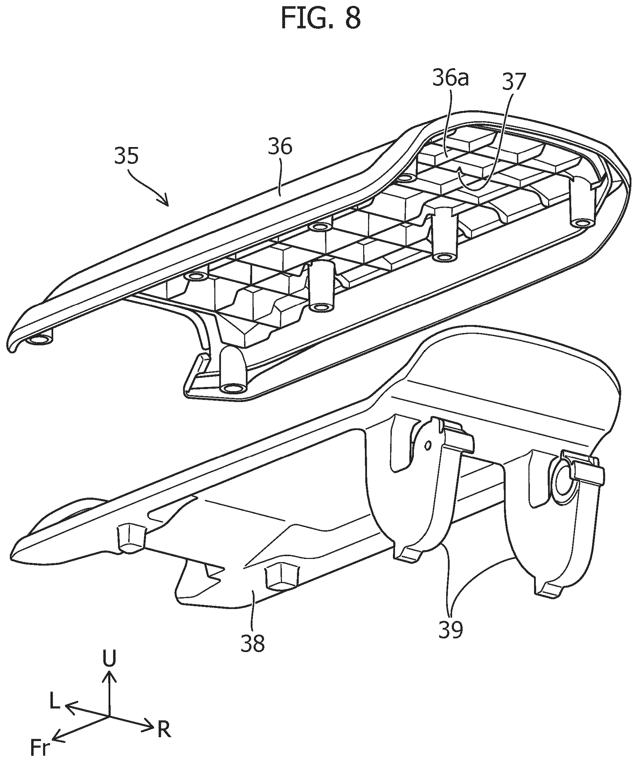

Here, the structure of the armrest 35 is described. As shown in Figure 2 and Figure 8, the armrest 35 has a top surface portion 36 and a bottom surface portion 38. An upper front surface of the top surface portion 36 is a part constituting an upper front surface of the armrest 35 and is a part serving as a so-called design surface and directly touched by the occupant. The bottom surface portion 38 is a plate-like member disposed below the top surface portion 36 and is formed of a resin material. The top surface portion 36 is attached to the bottom surface portion 38, and the top surface portion 36 and the bottom surface portion 38 constitute a lid that opens and closes the upper-side open portion 31 as a whole. On both vehicle-width-direction side portions of a lower surface of the bottom surface portion 38, coupling portions 39 that protrude to the vehicle lower side from the lower surface and are coupled to the storage box 30 are provided. In rear portions of the coupling portions 39, through-holes passing therethrough in the vehicle width direction are provided, and a turning shaft 46a (Figure 7) is inserted therethrough.

A reverse-side fragile portion 37 is provided in a reverse surface (a reverse surface of the upper front surface) of the top surface portion 36 of the present embodiment. The reverse-side fragile portion 37 is disposed between the coupling portions 39 on both sides in the vehicle width direction. As shown in Figure 7, the reverse-side fragile portion 37 is disposed on the rear side relative to the rear-side fragile portion 23. The reverse-side fragile portion 37 is formed to have a lower rigidity than the coupling portions 39. The reverse-side fragile portion 37 is formed to have a lower rigidity than the top surface portion 36 located on the front side and the rear side relative to the reverse-side fragile portion 37.

As shown in Figure 8, ribs 36a extending in the vehicle front-rear direction and the vehicle width direction are formed on the reverse surface of the top surface portion 36. The reverse-side fragile portion 37 of the present embodiment has a cutout formed in the ribs 36a. The cutout is preferably cut out upward from a lower end of the ribs 36a, for example. By providing the cutout, the rigidity is reduced as compared to the periphery of the cutout.

By providing the reverse-side fragile portion 37, the following occurs. When a part of the body of the occupant collides with the armrest 35, for example, when the head collides with the armrest 35, the reverse-side fragile portion 37 located between the coupling portions 39 can absorb the impact energy and effectively disperse the impact energy to the coupling portions 39 on both sides by fracturing. The reverse-side fragile portion 37 is disposed on the vehicle rear side relative to the rear-side fragile portion 23, and hence it becomes possible to effectively deform the rear portion of the rear console 2.

The description of the present embodiment is an exemplification for describing the present invention and does not limit the invention as claimed in the claims. Each configuration of the present invention is not limited to the embodiment described above, and various modifications are possible within the technical scope claimed in the claims.

For example, the fragile portion of the present embodiment has the rear-side fragile portion 23 and the front-side fragile portion 24, but the present invention is not limited thereto. For example, it is possible to provide only one of the rear-side fragile portion 23 and the front-side fragile portion 24. In the present embodiment, an opening is provided in the main portion 20a of the seating surface portion 20 and a part that is fragile in the load in the up-down direction is provided, but it is not limited thereto. For example, an opening does not necessarily need to be provided in the main portion 20a, or a part of the main portion 20a may have a thin structure.

### [Reference Signs List]

- 1: Console unit
- 2: Rear console
- 5: Instrument panel
- 6: Floor panel
- 10: Frame structure body
- 11: Side wall portion
- 12: Base portion
- 13: First beam portion
- 14: Second beam portion
- 14a: Front-side attachment portion
- 16: Rear leg portion
- 17: Front leg portion
- 18a: Upper-front-side open portion
- 18b: Upper-rear-side open portion
- 18c: Lower-rear-side open portion
- 18d: Lower intermediate open portion (side wall open portion)
- 18e: Lower-front-side open portion
- 20: Seating surface portion
- 20a: Main portion
- 20b: Upper-side flange portion
- 20c: Fastening portion
- 23: Rear-side fragile portion
- 23a: Front end surface
- 24: Front-side fragile portion
- 24a: Cutout portion
- 24b: Connecting portion
- 30: Storage box
- 31: Upper-side open portion (open portion)
- 32: Flange
- 35: Armrest
- 36: Top surface portion
- 37: Reverse-side fragile portion
- 38: Bottom surface portion
- 39: Coupling portion
- 40: Bracket
- 40a: Upper surface portion
- 41: Front wall
- 41a: Front flange
- 42: Rear left wall
- 42a: Left flange
- 43: Rear right wall
- 43a: Right flange
- 44a: Rear flange
- 47: Side surface cover
- 48: Rear surface cover
- 50: Front console
- 51: Lower-side unit
- 52: Side wall
- 53: Upper-side unit
- 54: Cup holder portion
- 55: Shift selector (shift lever)
- 56: Open portion
- 57: Storage portion

## Claims

1. A vehicle console structure comprising:
a frame structure body extending in a vehicle front-rear direction and having side wall portions disposed to be spaced apart from each other in a vehicle width direction in a vehicle-width-direction intermediate portion of a floor portion in a vehicle compartment;
a bracket configured to attach the vehicle body frame to the floor portion and having a fastening portion to which a lower portion of the frame structure body is fastened;
a storage box disposed between the side wall portions on both sides, extending in a vehicle up-down direction, and having an open portion in an upper portion; and
an armrest disposed on an upper portion of the storage box and configured to be able to open and close the open portion, **characterized in that** a fragile portion, which is fragile compared to the side wall portion located on an outer side of the storage box in the vehicle up-down direction, is provided in the side wall portion located on at least one of a vehicle front side and a vehicle rear side of the fastening portion, and on a lower side relative to the storage box.

2. The vehicle console structure according to claim 1, wherein:
the side wall portion has:
a base portion disposed in an upper portion of the side wall portion and having a higher rigidity than the fragile portion;
a seating surface portion disposed on the lower side of the base portion and in abutment against the bracket; and
a rear leg portion extending toward a rear portion of the seating surface portion from a rear portion of a lower portion of the base portion;
the fastening portion is provided in a vehicle-front-rear-direction intermediate portion of the seating surface portion;
the fragile portion includes a rear-side fragile portion disposed on the vehicle rear side of the fastening portion;
the rear-side fragile portion extends in the vehicle front-rear direction and is inclined upward as the rear-side fragile portion approaches a vehicle-width-direction inner side from a vehicle-width-direction inner side portion of an upper portion of the seating surface portion; and
the vehicle-width-direction inner side portion of the rear-side fragile portion in the vehicle width direction of the rear-side fragile portion is connected to the rear leg portion.

3. The vehicle console structure according to claim 1 or 2, wherein:
the side wall portion has:
a base portion disposed in an upper portion of the side wall portion and having a higher rigidity than the fragile portion;
a seating surface portion disposed on the lower side of the base portion and in abutment against the bracket; and
a front leg portion extending toward a front portion of the seating surface portion from a vehicle-front-rear-direction intermediate portion of a lower portion of the base portion;
the fastening portion is provided in a vehicle-front-rear-direction intermediate portion of the seating surface portion;
the fragile portion includes a front-side fragile portion disposed on the vehicle front side of the bracket; and
the front-side fragile portion is provided on the vehicle front side of an upper portion of the seating surface portion and has a cutout portion cut out toward the front leg portion.

4. The vehicle console structure according to claim 3, wherein:
the fragile portion includes a front-side fragile portion disposed on a front side of the fastening portion of the bracket, and a rear-side fragile portion disposed on a rear side of the fastening portion;
the rear-side fragile portion extends in the vehicle front-rear direction, is inclined upward as the rear-side fragile portion approaches a vehicle-width-direction inner side from a vehicle-width-direction inner side portion of the upper portion of the seating surface portion, and is formed to have a plate thickness that is constant along the vehicle front-rear direction;
the front leg portion is formed such that a length in the vehicle front-rear direction becomes shorter as the front leg portion extends downward; and
the front-side fragile portion has a length in the vehicle front-rear direction that is set to be longer than a length of the rear-side fragile portion in the vehicle front-rear direction of the rear-side fragile portion.

5. The vehicle console structure according to claim 3 or 4, wherein the rear-side fragile portion has a plate thickness formed to be thinner than a plate thickness of the seating surface portion and a plate thickness of the rear leg portion.

6. The vehicle console structure according to any of claims 2 to 5 when dependent on claim 2, wherein:
a coupling portion protruding to a vehicle lower side from a reverse surface of an upper front surface of the armrest and coupled to the storage box is provided on each of both vehicle-width-direction side portions of the reverse surface;
a reverse-side fragile portion formed to have a lower rigidity than the coupling portion is provided on the reverse surface located between the coupling portion on each of both sides in the vehicle width direction; and
the reverse-side fragile portion is disposed on a rear side relative to the rear-side fragile portion.

7. The vehicle console structure according to any of claims 3 to 6 when dependent on claim 3, wherein:
a side wall open portion is provided in the side wall portion located on a front side of the front leg portion;
a front-side attachment portion attached to the side wall portion is provided on a front portion of the storage box; and
the front-side attachment portion is disposed in an intermediate portion in the vehicle front-rear direction on a vehicle upper side of the side wall open portion.

8. The vehicle console structure according to any of claims 1 to 7, wherein the fragile portion includes a front-side fragile portion disposed on a front side of the bracket, and a rear-side fragile portion disposed on a rear side of the bracket.
